# EUROPÄISCHE PATENTSCHRIFT

(11) **EP 1 498 582 B1**
(45) Veröffentlichungstag und Bekanntmachung des Hinweises auf die Patenterteilung: **22.02.2012**
(21) Anmeldenummer: 04015848.7
(22) Anmeldetag: 06.07.2004
(51) Int. Cl.: F01M 1/10, F01M 11/00, F01M 13/04

(54) **Ölfilter und Ölabscheider-Modul für eine Brennkraftmaschine**
Oil filter and oil separator module for combustion engine
Module comprenant un filtre à huile et un séparateur pour moteur à combustion interne

(30) Priorität: 14.07.2003 DE 20310841 U
(43) Veröffentlichungstag der Anmeldung: 19.01.2005
(60) Teilanmeldung: 11174890.1
(73) Patentinhaber: Hengst GmbH & Co. KG, 48147 Münster (DE)
(72) Erfinder: Ardes, Wilhelm, 59387 Ascheberg (DE)
(74) Vertreter: Linnemann, Winfried

(56) Entgegenhaltungen:
- EP-A1- 0 898 060
- EP-A1- 1 211 390
- EP-A2- 0 926 322
- DE-A1- 19 757 759
- DE-U1- 20 012 736
- US-A- 3 223 197

## Beschreibung

Die vorliegende Erfindung betrifft ein Modul für eine Brennkraftmaschine gemäß dem Oberbegriff des Anspruchs 1.

Module für Brennkraftmaschine, in denen unterschiedliche Nebenaggregate oder Komponenten der Brennkraftmaschine zusammengefasst und räumlich kompakt untergebracht sind, sind aus dem Stand der Technik bekannt.

Das Dokument DE 200 12 736 U1 offenbart ein Modul für eine Brennkraftmaschine, das als bauliche Einheit aus zumindest einem Ölfilter für das Sachmieröl der Brennkraftmaschine und einem Ölabscheider für das Kurbelgehäuseentlüftungsgas der Brennkraftmaschine ausgebildet ist. Konkret ist hier ein Ölablauf, der bei Ausbau eines Filterelements des Ölfilters freigebbar ist, mit einem weiteren Kanal einer zweiten Gehäusestruktur, wie Ölabscheider, zusammengefasst, wodurch die Zahl der in einer Flanschverbindung zur zugehörigen Brennkraftmaschine benötigten Kanäle um einen Kanal reduziert wird.

Die EP 0 898 060 B1 beschreibt ein Ölmodul für Brennkraftmaschinen. Bei diesem bekannten Modul ist vorgesehen, dass es als eine bauliche Einheit aus Ölfilter, ÖIkühler und Entlüftungssystem mit Ölabscheider ausgebildet ist und dass das Modul als ganzes an die Brennkraftmaschine angeflanscht ist. Das Kurbelgehäuseentlüftungsgas gelangt über einen in die Flanschverbindung integrierten Übertrittsquerschnitt aus dem Kurbelgehäuse in den Ölabscheider, wo das im Kurbelgehäuseentlüftungsgas enthaltene Öl vom Gas abgetrennt wird. Das abgetrennte Öl wird über einen eigenen Ölrücklaufkanal in die Ölwanne zurückgeführt. Es wird hier also jeweils ein eigener Gaskanal und Ölrücklaufkanal benötigt.

Von ölfiltern für Brennkraftmaschinen ist es an sich bekannt, diese mit einer automatischen Entleerung bei einem Filtereinsatzwechsel auszustatten. Eine solche automatische Entleerung ist bei dem Ölfilter des Moduls gemäß EP 0 898 060 B1 nachteilig nicht vorgesehen.

Für die vorliegende Erfindung stellt sich die Aufgabe, ein Modul der eingangs genannten Art zu schaffen, das die aufgeführten Nachteile vermeidet und bei dem eine möglichst große Zahl von Funktionen mit einer möglichst kleinen Zahl von in der Flanschverbindung zu verbindenden Kanälen erfüllt wird.

Die Lösung der gestellten Aufgabe gelingt erfindungsgemäß mit einem Modul gemäß dem Oberbegriff des Anspruchs 1, das dadurch gekennzeichnet ist, dass im Modul für eine Entleerung des Ölfilters bei einem Filtereinsatzwechsel ein Entleerungskanai vorgesehen ist, der durch die Flanschverbindung mit dem Kurbelgehäuse der Brennkraftmaschine verbunden ist, und dass der Entleerungskanal, der Entlüftungskanal und der Ölrücklaufkanal in der Flanschverbindung und zumindest über einen Teil ihrer Länge im Modul zu einem einzigen, kombinierten Gas- und Ölkanal zusammengefasst sind.

Bei diesem efindungsgemäßen Modul wird eine geringe Zahl von in der Flanschverbindung zu verbindenden Kanälen erreicht, weil der kombinierte Gas- und Ölkanal die Funktion von drei herkömmlichen Kanälen übernimmt. Im Betrieb der Brennkraftmaschine strömen durch den kombinierten Gas- und Ölkanal die Kurbelgehäuseentlüftungsgase aus dem Kurbelgehäuse in den Ölabscheider. Das im Ölabscheider abgeschiedene Öl kann, je nach Konstruktion des Ölabscheiders, kontinuierlich während des Betriebes der Brennkraftmaschine oder diskontinuierlich bei Betriebspausen der Brennkraftmaschine vom Ölabscheider durch denselben Gas- und Ölkanal zum Kurbelgehäuse und zur Ölwanne zurückgeführt werden. Weiterhin wird der kombinierte Gas- und Ölkanal dazu genutzt, den Ölfilter bei einem Filtereinsatzwechsel zu entleeren und das Öl aus dem Ölfilter in die Ölwanne ablaufen zu lassen. Durch die Vereinigung dieser verschiedenen Funktionen in dem kombinierten Gas- und Ölkanal wird die Zahl der in der Flanschverbindung zu verbindenden Kanäle geringer als bei einem herkömmlichen Modul mit der gleichen Anzahl von Funktionen, was die Herstellung des Moduls und der Flanschverbindung des Moduls zur Brennkraftmaschine vereinfacht. Dabei wirkt sich diese Vereinfachung auch kostenmindemd auf die Herstellung der Brennkraftmaschine aus, weil auch auf deren Seite die Anzahl der Kanäle verringert und dadurch der Herstellungsaufwand kleiner wird.

In weiterer Ausgestaltung des Moduls ist vorgesehen, dass es einen Ölkühler zur Kühlung des Schmieröls der Brennkraftmaschine mittels deren Kühlwassers umfasst, dass der Ölkühler einen bei einem Öl- und/oder Filtereinsatzwechsel freigebbaren Ölablass aufweist und dass der Ölablass in den kombinierten Gas- und Ölkanal mündet. In dieser Ausführung hat das Modul als zusätzliche Funktion die Kühlung des Schmieröls. Für den Ablass des Schmieröls aus dem Ölkühler im Falle eines Öl- und/oder Filtereinsatzwechsels wird hier kein zusätzlicher Kanal benötigt, sondern es wird der ohnehin vorhandene kombinierte Gas- und Ölkanal auch für diesen Zweck mit genutzt.

Um für die Zuführung und Abführung von Kühlwasser zum bzw vnm Ölkühler keine externen Leitungen verlegen zu müssen, ist weiter vorgesehen, dass das Modul je einen Kühlwasser von der Brennkraftmaschine zum Ölkühler und Kühlwasser vom Ölkühler zur Brennkraftmaschine führenden, durch die Flanschverbindung verlaufenden Kühlwasserkanal umfasst.

Eine weitere Vergrößerung der Zahl der Funktionen des erfindungsgemäßen Moduls kann dadurch erreicht werden, dass das Modul einen Schmieröleinfüllstutzen für das Einfüllen von Schmieröl nach einem Ölwechsel und für ein bedarfsweises Nachfüllen von Schmieröl in die Brennkraftmaschine umfasst und dass der Schmieröleinfüllstutzen in den kombinierten Gas- und Ölkanal mündet. Vorteilhaft führt die Aufnahme dieser zusätzlichen Funktion in das Modul nicht zu einer Vergrößerung der Anzahl der in der Flanschverbindung zu verbindenden Kanäle, da auch für diese weitere Funktion der ohnehin vorhandene kombinierte Gas- und Ölkanal genutzt wird.

Bei modernen Brennkraftmaschinen erfolgt nach deren Herstellung die erstmalige Befüllung mit Schmieröl nicht über den üblichen Schmieröleinfüllstutzen sondern über einen speziellen Befüllstutzen oder Befüllanschluss. Eine erfindungsgemäße Weiterbildung des Moduls schlägt deshalb vor, dass das Modul einen Befüllstutzen oder Befüllanschluss für das erstmalige Befüllen der Brennkraftmaschine mit Schmieröl umfasst und dass der Befüllstutzen oder Befüllanschluss in den kombinierten Gas- und Ölkanal mündet. Auch diese zusätzliche Funktion benötigt keinen zusätzlichen Kanal im Bereich der Flanschverbindung, da auch für die Weiterleitung des Schmieröls bei der Erstbefüllung der Brennkraftmaschine der ohnehin vorhandene kombinierte Gas- und Ölkanal genutzt wird.

Für einen störungsfreien Betrieb der Brennkraftmaschine ist es wesentlich, dass im Kurbelgehäuse der Druck innerhalb vorgegebener Grenzwerte gehalten wird. Hierfür wird üblicherweise mindestens ein Druckregelventil eingesetzt, das für die Druckregelung im Kurbelgehäuse sorgt. Erfindungsgemäß ist vorgesehen, dass das Modul ein im Strömungsweg des im Ölabscheider gereinigten Kurbelgehäuseentlüftungsgases liegendes Druckregelventil zur Regelung des im Kurbelgehäuse herrschenden Drucks umfasst. Da das Kurbelgehäuseentlüftungsgas ohnehin aus der Brennkraftmaschine in das Modul geführt wird, führt die zusätzliche Integration des Druckregelventils in das Modul ebenfalls nicht zu einer Zunahme der Zahl der in der Flanschverbindung zu verbindenden Kanäle

In weiterer Ausgestaltung des zuletzt beschriebenen Moduls ist vorgesehen, dass das Druckregelventil auf den Ölabscheider aufgesetzt ist und einen Leitungsanschluss für eine zu einem Ansaugtrakt der Brennkraftmaschine führende Gasleitung für das im Ölabscheider entölte Kurbelgehäuseentlüftungsgas aufweist. In dieser Ausgestaltung kann das Druckregelventil platzsparend untergebracht werden und es muss an das Druckregelventil lediglich noch eine zum Ansaugtrakt der Brennkraftmaschine führende Leitung angeschlossen werden, durch die das gereinigte Kurbelgehäuseentlüftungsgas zum Ansaugtrakt der Brennkraftmaschine strömen kann. Dabei wird die Strömung und gleichzeitig der Druck im Kurbelgehäuse durch das Druckregelventil reguliert.

Für alle vorstehend beschriebenen Module gemäß Erfindung ist bevorzugt vorgesehen, dass die die Flanschverbindung durchlaufenden Kanäle gegeneinander und gegen die Umgebung durch axial dichtende Dichtmittel abgedichtet sind. Mit axial dichtenden Dichtmitteln können die Flansche der Flanschverbindung auf der Seite des Moduls und auf der Seite der Brennkraftmaschine relativ einfach gehalten werden, was zu niedrigen Herstellungskosten auf beiden Seiten beiträgt.

In weiterer Ausgestaltung sind dabei bevorzugt die Dichtmittel der Flanschverbindung an dem modulseitigem Flansch angebracht. Da das Modul im Verhältnis zur übrigen Brennkraftmaschine ein vergleichsweise kleines und leichtes Bauteil ist, unterliegen die Dichtmittel nach ihrer Vorab-Anbringung am Modul einer geringeren Beschädigungsgefahr als dies bei einer Vorab-Anbringung der Dichtmittel an der Brennkraftmaschine der Fall wäre, bis die Flanschverbindung hergestellt ist.

Zur weiteren Vereinfachung der Herstellung der Flanschverbindung schlägt die Erfindung vor, dass die Dichtmittel durch eine einzige, einstückige Profildichtung gebildet sind. Hiermit werden Fehlerquellen bei der Montage vermieden, die entstehen würden, wenn mehrere kleinere Dichtungen im Bereich der Flanschverbindung anzubringen wären.

Damit das oder die Dichtmittel am Modul nicht unbeabsichtigt verloren gehen oder ihre Soll-Position unbeabsichtigt verlassen und somit Undichtigkeiten verursachen, ist gemäß Erfindung vorgesehen, dass das oder die Dichtmittel in eine oder mehrere Aufnahmennuten im modulseitigen Flansch eingesetzt oder eingeklemmt oder eingeklebt oder einvulkanisiert ist/sind.

Gemäß einer alternativen Ausführung ist vorgesehen, dass die Flanschverbindung beidseitig ebenflächig ausgeführt ist und dass das Dichtmittel eine einstückige Flachdichtung ist.

Mit allen Ausführungen des erfindungsgemäßen Moduls werden verschiedene Vorteile einzeln oder kombiniert erreicht. Insbesondere wird eine Minimierung der Zahl der Kanäle in der Flanschverbindung erzielt, was zu einer entsprechenden Reduzierung von Dichtstellen und Leckagegefahren sowie zu Kosteneinsparungen führt. Außerdem wird durch die besonders kompakte Bauweise gleichzeitig Gewicht eingespart und zusätzlicher Raum gewonnen, der für die Unterbringung oder Anbringung weiterer Komponenten der Brennkraftmaschine genutzt werden kann. So können z.B. eine Lichtmaschine oder ein Klimaanlagenkompressor über mit Verstärkungsrippen versehene, am Modul angeformte Halterungen als Anbauteil mit dem Modul verbunden werden. Generell wird mit den Modulen eine größere Gestaltungsfreiheit in immer enger werdenden Motorräumen von modernen Kraftfahrzeugen erreicht.

Im Folgenden werden Ausführungsbeispiele des erfindungsgemäßen Moduls anhand einer Zeichnung erläutert. Die Figuren der Zeichnung zeigen:
- Figur 1: ein erstes Modul zusammen mit einer Brennkraftmaschine in einer stark schematisierten Darstellung,
- Figur 2: das Modul aus Figur 1 in einer Ansicht auf seinen Verbindungsflansch,
- Figur 3: ein zweites Modul zusammen mit einer Brennkraftmaschine, ebenfalls in schematischer Darstellung, und
- Figur 4: das Modul aus Figur 3 in Ansicht auf seinen Verbindungsflansch.

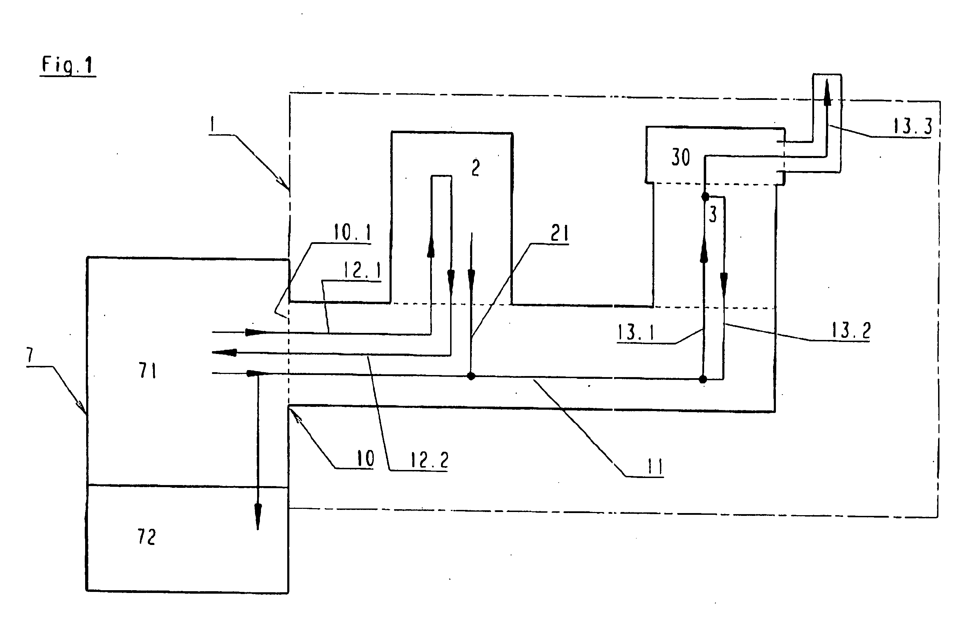

Die Figur 1 zeigt links eine nur schematisch dargestellte Brennkraftmaschine 7, an die rechts ein Modul 1 mittels einer Flanschverbindung 10 angebaut ist.

Von der Brennkraftmaschine 7 sind in der Zeichnung nur oben deren Kurbelgehäuse 71 und darunter deren Ölwanne 72 dargestellt. Die weiteren Teile der Brennkraftmaschine 7 sind hier nicht sichtbar.

Das Modul 1 gemäß Figur 1 umfasst einen Ölfilter 2 und einen Ölabscheider 3. Im Ölfilter 2 wird von der Brennkraftmaschine 7 durch einen Rohölkanal 12.1 zugeführtes, zu reinigendes Schmieröl gefiltert. Durch einen Reinölkanal 12.2 fließt das gefilterte Öl vom Ölfilter 2 zurück zur Brennkraftmaschine 7.

Für einen Filtereinsatzwechsel des Ölfilters 2 ist eine automatische Entleerung des Ölfilters 2 vorgesehen, wozu der Ölfilter 2 einen Entleerungskanal 21 aufweist. Der Entleerungskanal 21 wird automatisch geöffnet, wenn ein Filtereinsatz aus dem Ölfilter 2 entnommen wird. Durch den Entleerungskanal 21 strömt das Öl aus dem Ölfilter 2 unter Schwerkraftwirkung ab. Der Entleerungskanal 21 mündet in einen durch das Modul 1 verlaufenden, zur Brennkraftmaschine 7 führenden Kanal 11.

Die Kanäle 11, 12.1 und 12.2 sind im Bereich der Flanschverbindung 10 mit entsprechenden Kanälen der Brennkraftmaschine 7 verbunden.

Der Kanal 11 ist auf der Seite der Brennkraftmaschine 7 mit deren Kurbelgehäuse 71 verbunden, so dass Kurbelgehäuseentlüftungsgas durch den Kanal 11 zum Ölabscheider 3 strömen kann. Das Kurbelgehäuseentlüftungsgas wird nahe dem Ende des Kanals 11 über einen Entlüftungskanal 13.1 in den Ölabscheider 3 eingeleitet. Im Ölabscheider 3 wird im Kurbelgehäuseentlüftungsgas mitgeführtes Öl in Form von Ölnebel und Öltröpfchen abgeschieden. Das abgeschiedene Öl wird in einen Ölrücklaufkanal 13.2 geführt, der vom Ölabscheider 3 wieder in den Kanal 11 führt. Das im Ölabscheider 3 abgetrennte Öl wird wahlweise kontinuierlich während des Betriebes der Brennkraftmaschine oder diskontinuierlich in Betriebspausen der Brennkraftmaschine in den Ölrücklaufkanal 13.2 und von dort in den kombinierten Gas- und Ölkanal 11 entlassen. Durch den Kanal 11 strömt das abgeschiedene Öl zur Brennkraftmaschine 7 und dort in deren Ölwanne 72.

Der kombinierte Gas- und Ölkanal 11 erfüllt also in dem Modul gemäß Figur 1 insgesamt drei Funktionen. Er dient zur Ölableitung bei der Entleerung des Ölfilters 2 bei einem Filtereinsatzwechsel, er dient zur Zuführung des Kurbelgehäuseentlüftungsgases zum Ölabscheider 3 und er dient zur Rückführung des im Ölabscheider 3 abgeschiedenen Öls zur Brennkraftmaschine 7.

Das im Ölabscheider 3 gereinigte und von Öl befreite Kurbelgehäusegas wird einem am Modul 1 außerhalb der Flanschverbindung vorgesehenen Anschluss 13.3 zugeleitet, der mit einem Ansaugtrakt der Brennkraftmaschine 7 verbunden bzw. verbindbar ist. Hierzu kann beispielsweise eine Schlauchleitung verwendet werden.

Zur Einhaltung eines vorgegebenen Drucks des Kurbelgehäusegases im Kurbelgehäuse 71 der Brennkraftmaschine 7 ist in das Modul gemäß Figur 1 noch ein Druckregelventil 30 integriert. Das Druckregelventil 30 ist hier auf den Ölabscheider 3 aufgesetzt und befindet sich im Strömungsweg des gereinigten Kurbelgehäuseentlüftungsgases vom Ölabscheider 3 zum Anschluss 13.3.

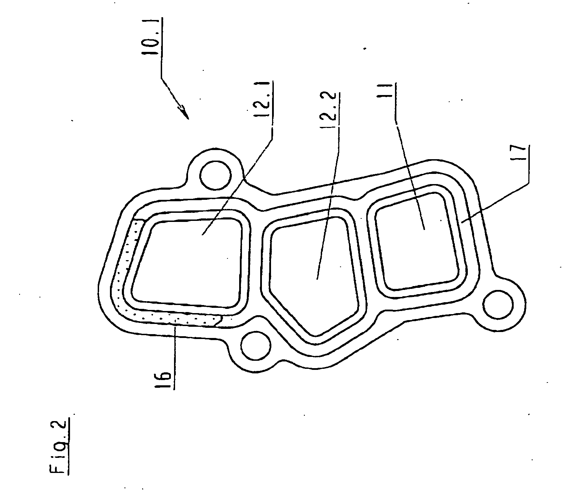

Figur 2 zeigt eine Ansicht des modulseitigen Flansches 10.1 der Flanschverbindung 10 gemäß Figur 1. Wie schon in Figur 1 erläutert, umfasst die Flanschverbindung dort insgesamt drei Kanäle. Diese drei Kanäle finden sich der Ansicht auf den Flansch 10.1 in Figur 1 wieder. Der Kanal 12.1 ist der Rohölkanal, durch den von der Brennkraftmaschine 7 verunreinigtes, zu filterndes Öl zum Ölfilter 2 geleitet wird. Der Kanal 12.2 führt das im Filter 2 gefilterte Schmieröl wieder zur Brennkraftmaschine 7 und deren Schmierstellen zurück.

Der Kanal 11 des Flansches 10.1 ist der kombinierte Gas- und Ölkanal, der zum Rückführen von Schmieröl bei Entleerung des Ölfilters 2 bei einem Filtereinsatzwechsel, zum Rückführen des im Ölabscheider 3 aus dem Kurbelgehäuseentlüftungsgas abgeschiedenen Öls und, in umgekehrter Strömungsrichtung, zur Zuführung des Kurbelgehäuseentlüftungsgases aus dem Kurbelgehäuse 71 der Brennkraftmaschine 7 zum Ölabscheider 3 dient.

Da ein Filtereinsatzwechsel des Ölfilters 2 nur bei Stillstand der Brennkraftmaschine 7 erfolgen kann, wird der kombinierte Gas- und Ölkanal 11 bei der Entleerung des Ölfilters 2 nicht gleichzeitig von Kurbelgehäuseentlüftungsgas durchströmt, sodass gegenseitige Störungen vermieden werden. Eine Rückführung von Schmieröl vom Ölabscheider 3 kann, je nach Gestaltung des Ölabscheiders 3, entweder kontinuierlich während des Betriebes der Brennkraftmaschine oder diskontinuierlich in Betriebspausen der Brennkraftmaschine erfolgen. Wenn die Ölrückleitung kontinuierlich erfolgt, fließt das Öl vom Ölabscheider 3 kommend in Richtung zur Brennkraftmaschine 7 und dort in deren Ölwanne 72. Im Gegenstrom dazu strömt das Kurbelgehäuseentlüftungsgas durch denselben Gas- und Ölkanal 11 vom Kurbelgehäuse 71 zum Ölabscheider 3. Damit die beiden Strömungen sich bei einem gleichzeitigen Auftreten nicht gegenseitig stören, wird der kombinierte Gas- und Ölkanal 11 zweckmäßig mit einem entsprechend großen Querschnitt ausgeführt, so dass nur relativ geringe Strömungsgeschwindigkeiten des Kurbelgehäuseentlüftungsgases entstehen, die nicht zu einem Mitreißen des im Ölabscheider 3 abgeschiedenen Öls entgegen dessen vorgesehener Fließrichtung führen. Dieses Problem kann gänzlich vermieden werden, wenn das im Ölabscheider 3 abgeschiedene Öl mit Hilfe eines geeigneten Ventils diskontinuierlich nur in den Betriebspausen der Brennkraftmaschine aus dem Ölabscheider 3 abgelassen und in den Kanal 11 eingeleitet wird.

Obwohl das Modul 1 gemäß Figur 1 die Funktionen des Filterns des Schmieröls, des Entleerens des ölfilter bei einem Filtereinsatzwechsel, des Entlüftens des Kurbelgehäuses 71, des Abscheidens und Rückführens von Öl aus dem Kurbelgehäuseentlüftungsgas und die Regelung des Drucks im Kurbelgehäuse 71 übernimmt, werden zur Erfüllung aller Funktionen im Bereich der Flanschverbindung 10 nur drei Kanäle benötigt, die miteinander verbunden werden müssen. Hinzu kommt dann lediglich noch die externe Strömungsverbindung, die an den Anschluss 13.3 des Moduls 1 (vgl. Figur 1) anzuschließen ist.

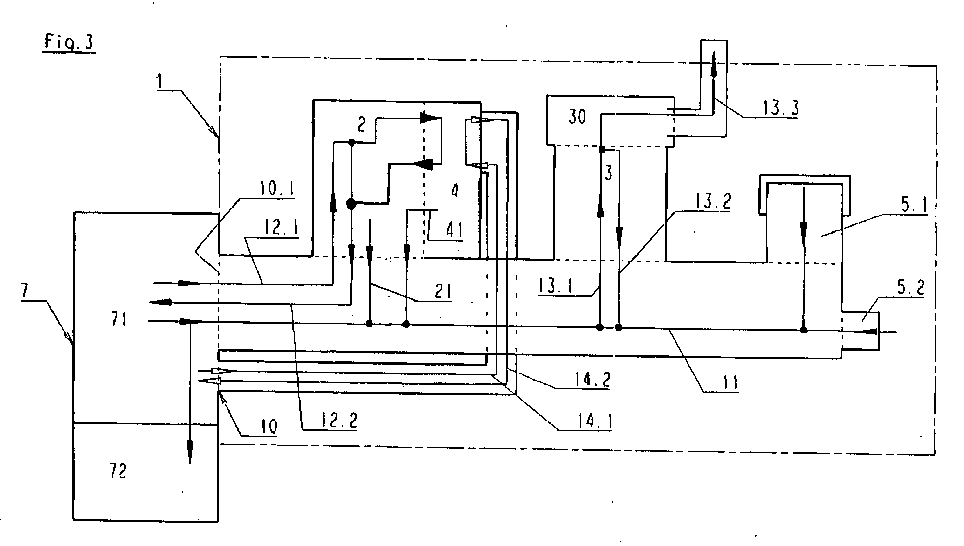

Figur 3 zeigt eine zweite Ausführung des Moduls 1, wieder in einer schematischen Darstellung. Im Unterschied zu dem Bespiel gemäß Figur 1 weist das Modul 1 gemäß Figur 3 zusätzlich einen Ölkühler 4, einen Schmieröleinfüllstutzen 5.1 und einen Schmierölbefüllanschluss 5.2 auf.

Der Ölkühler 4 ist an den Ölfilter 2 angebaut. Je nach Temperatur des Schmieröls wird ein mehr oder weniger großer Anteil des durch den Ölfilter 2 strömenden Schmieröls zusätzlich durch den Ölkühler 4 geleitet. Das zu filternde und ggf. auch zu kühlende Öl gelangt durch den Rohölkanal 12.1 von der Brennkraftmaschine 7 zunächst in den Ölfilter 2 und dann bei Bedarf in den Ölkühler 4. Das gefilterte und ggf. zusätzlich gekühlte Öl gelangt vom Ölfilter 2 und Ölkühler 4 durch den Reinölkanal 12.2 zurück zur Brennkraftmaschine 7.

Zur Kühlung des Schmieröls im Ölkühler 4 dient Kühlwasser aus dem Kühlwasserkreislauf der Brennkraftmaschine 7. Um ohne externe Leitungsverbindungen Kühlwasser zum Ölkühler 4 und zurück zur Brennkraftmaschine 7 zu führen, umfasst das Modul 1 hier zwei weitere Kanäle, nämlich einen ersten Kühlwasserkanal 14.1, der von der Brennkraftmaschine 7 durch die Flanschverbindung 10 zum Ölkühler 4 führt, und einen zweiten Kühlwasserkanal 14.2, der vom Ölkühler 4 durch die Flanschverbindung 10 zurück zur Brennkraftmaschine 7 führt. Die Integration des Ölkühles 4 in das Modul 1 führt also lediglich zu einer Vermehrung der Anzahl der Kanäle in der Flanschverbindung um zwei weitere Kanäle, wodurch der Mehraufwand in Grenzen gehalten wird. Für die Zuführung des Schmieröls zum Ölkühler 4 und für die Ableitung des Schmieröls vom Ölkühler 4 werden nur innerhalb des Moduls 1 zwischen dem Ölfilter 2 und dem Ölkühler 4 ausgebildete Kanäle benötigt, die nicht durch die Flanschverbindung 10 verlaufen.

Weiterhin ist bei dem Modul 1 gemäß Figur 3 am Ölkühler 4 noch ein Ölablass 41 vorgesehen. Dieser Ölablass 41 dient dazu, bei einem Ölwechsel auch das im Ölkühler 4 befindliche Schmieröl abzuleiten, um einen möglichst vollständigen Austausch des Schmieröls bei einem Ölwechsel zu gewährleisten. Das Öffnen des Ölablasses 41 kann manuell oder durch einen Filtereinsatzwechsel automatisch bewirkt werden. Der Ölablass 41 ist innerhalb des Moduls 1 mit dem kombinierten Gas- und Ölkanal 11 verbunden. Damit dient hier der kombinierte Gas- und Ölkanal 11 für eine weitere Funktion, nämlich das Entleeren des Ölkühlers 4 von Schmieröl, ohne dass diese zusätzliche Funktion eine Erhöhung der Zahl der Kanäle in der Flanschverbindung 10 zur Folge hat.

Der Schmieröleinfüllstutzen 5.1 dient zum bedarfsweisen Nachfüllen von Schmieröl und zum Befüllen der Brennkraftmaschine mit Schmieröl bei einem Ölwechsel. Der Schmieröleinfüllstutzen 5.1 ist im Modul 1 mit dem kombinierten Gas- und Ölkanal 11 verbunden. Weiter hat das Modul 1 den Befüllstutzen oder Befüllanschluss 5.2, der für das erstmalige Befüllen der Brennkraftmaschine 7 mit Schmieröl dient und der ebenfalls in den kombinierten Gas- und Ölkanal 11 mündet. Damit wird bei dem Modul 1 gemäß Figur 3 der kombinierte Gas- und Ölkanal 11 noch für zwei weitere Funktionen über die schon in Figur 1 erläuterten Funktionen hinaus benutzt. Die Integration des Schmieröleinfüllstutzens 5.1 und des Befüllstutzens oder Befüllanschlusses 5.2 in das Modul 1 führen hier also ebenfalls nicht zu einer Erhöhung der Anzahl der Kanäle innerhalb der Flanschverbindung 10.

In seinen weiteren Funktionen, insbesondere hinsichtlich des Ölabscheiders 3 und des zugeordneten Druckregelventils 30, entspricht das Modul 1 nach Figur 3 der Ausführung gemäß Figur 1. Trotz seiner gegenüber dem Beispiel gemäß Figur 1 erheblich erhöhten Anzahl von Funktionen benötigt das Modul gemäß Figur 3 für seinen Anschluss an die Brennkraftmaschine nur zwei zusätzliche Kühlwasserkanäle, so dass in der Flanschverbindung 10 bei dem Modul 1 gemäß Figur 3 nur fünf Kanäle zu verbinden sind. Externe Leitungsverbindungen werden, abgesehen von der vom Anschluss 13.3 zum Ansaugtrakt führenden Leitung, nicht benötigt.

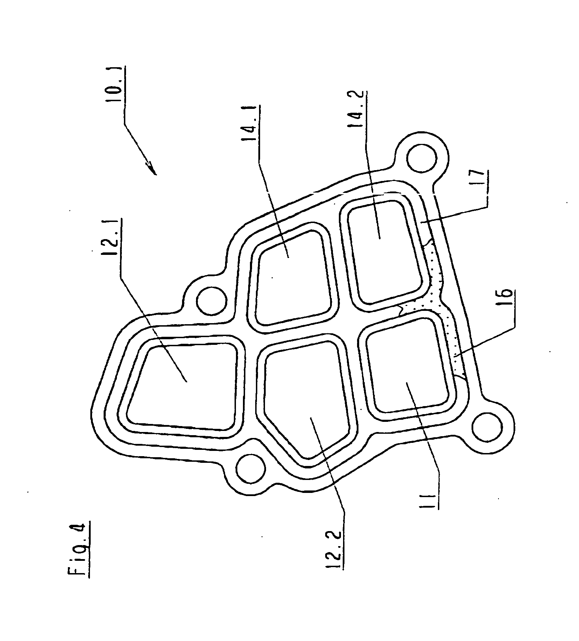

Figur 4 zeigt eine mögliche Ausführung des modulseitigen Flansches 10.1 des Moduls 1 gemäß Figur 3 in einer Ansicht. Wie aus Figur 4 ersichtlich ist, sind im Flansch 10.1 insgesamt fünf Kanäle vorgesehen, die mit entsprechenden Kanälen der Brennkraftmaschine 7 nach der Herstellung der Flanschverbindung 10 korrespondieren.

Der Kanal 12.1 ist der Rohölkanal, durch den zu filterndes und, je nach Temperatur, zu kühlendes Schmieröl zum Ölfilter 2 und ggf. zum Ölkühler 4 führbar ist.

Der Kanal 12.2 im Flansch 10.1 ist der Reinölkanal, durch den gefiltertes und ggf. gekühltes Schmieröl vom Ölfilter 2 und Ölkühler 4 zur Brennkraftmaschine 7 zurückgeführt wird.

Der Kanal 11 ist der kombinierte Gas- und Ölkanal, der mehrere Funktionen erfüllt. Auf der einen Seite dient der kombinierte Gas- und Ölkanal 11 der Rückführung von Schmieröl aus dem Ölfilter 2 und dem Ölkühler 4 bei einem Filtereinsatzwechsel oder Ölwechsel zur Brennkraftmaschine 7, zur Rückführung des im Ölabscheider 3 aus dem Kurbelgehäuseentlüftungsgas abgeschiedenen Öls zur Brennkraftmaschine 7 und zur Zuführung von bei einem Ölwechsel durch den Schmieröleinfüllstutzen 5.1 eingefülltem frischen Schmieröl zur Brennkraftmaschine 7. In der anderen Richtung dient der kombinierte Gas- und Ölkanal 11 zur Abführung von Kurbelgehäuseentlüftungsgas aus dem Kurbelgehäuse 71 der Brennkraftmaschine 7 zum Ölabscheider 3.

Die beiden weiteren Kanäle 14.1 und 14.2 sind Kühlwasserkanäle, die Kühlwasser von der Brennkraftmaschine 7 zum Ölkühler 4 und vom Ölkühler 4 zur Brennkraftmaschine 7 führen.

Zur Abdichtung der Flanschverbindung 10 und der einzelnen Kanäle gegeneinander sowie zur Umgebung dient hier bei allen gezeigten Beispielen eine einstückige Profildichtung 16, die jeweils in eine passend ausgeformte, vorzugsweise angegossene Nut 17 eingelegt ist. Alternativ kann die Flanschfläche auch absolut eben gestaltet sein und mit einer Flachdichtung mit passenden Durchbrechungen gegen die Brennkraftmaschine 7 abgedichtet sein.

## Patentansprüche

1. Modul (1) für eine Brennkraftmaschine (7), das als bauliche Einheit aus zumindest einem Ölfilter (2) für das Schmieröl der Brennkraftmaschine (7) und einem Ölabscheider (3) für das Kurbelgehäuseentlüftungsgas der Brennkraftmaschine (7) ausgebildet ist und das als Ganzes mittels einer Flanschverbindung (10) unter Herstellung von Strömungsverbindungen an die Brennkraftmaschine (7) angeflanscht ist, wobei ein Ölkanal (12.1) für zu filterndes Öl von der Brennkraftmaschine (7) zum Ölfilter (2) und ein Ölkanal (12.2) für gefiltertes Öl vom Ölfilter (2) zur Brennkraftmaschine (7) führt, wobei ein Entlüftungskanal (13.1) für Kurbelgehäuseentlüftungsgas vom Kurbelgehäuse (71) der Brennkraftmaschine (7) zum Ölabscheider (3) führt und wobei ein Ölrücklaufkanal (13.2) für abgeschiedenes Öl vom Ölabscheider (3) zum Kurbelgehäuse (71) der Brennkraftmaschine (7) führt,
**dadurch gekennzeichnet,**
- **dass** im Modul (1) für eine Entleerung des Ölfilters (2) bei einem Filtereinsatzwechsel ein Entleerungskanal (21) vorgesehen ist, der durch die Flanschverbindung (10) mit dem Kurbelgehäuse (71) der Brennkraftmaschine (7) verbunden ist, und
- **dass** der Entleerungskanal (21), der Entlüftungskanal (13.1) und der Ölrücklaufkanal (13.2) in der Flanschverbindung (10) und zumindest über einen Teil ihrer Länge im Modul (1) zu einem einzigen, kombinierten Gas- und Ölkanal (11) zusammengefasst sind.

2. Modul nach Anspruch 1, **dadurch gekennzeichnet, dass** das Modul (1) einen Ölkühler (4) zur Kühlung des Schmieröls der Brennkraftmaschine (7) mittels deren Kühlwassers umfasst, dass der Ölkühler (4) einen bei einem Öl- und/oder Filtereinsatzwechsel freigebbaren Ölablass (41) aufweist und dass der Ölablass (41) in den kombinierten Gas- und Ölkanal (11) mündet.

3. Modul nach Anspruch 2, **dadurch gekennzeichnet, dass** das Modul (1) je einen Kühlwasser von der Brennkraftmaschine (7) zum Ölkühler (4) und Kühlwasser vom Ölkühler (4) zur Brennkraftmaschine (7) führenden, durch die Flanschverbindung (10) verlaufenden Kühlwasserkanal (14.1, 14.2) umfasst.

4. Modul nach einem der vorhergehenden Ansprüche , **dadurch gekennzeichnet, dass** das Modul (1) einen Schmieröleinfüllstutzen (5.1) für das Einfüllen von Schmieröl nach einem Ölwechsel und für ein bedarfsweises Nachfüllen von Schmieröl in die Brennkraftmaschine (7) umfasst und dass der Schmieröleinfüllstutzen (5.1) in den kombinierten Gas- und Ölkanal (11) mündet.

5. Modul nach einem der vorhergehenden Ansprüche , **dadurch gekennzeichnet, dass** das Modul (1) einen Befüllstutzen oder Befüllanschluss (5.2) für das erstmalige Befüllen der Brennkraftmaschine (7) mit Schmieröl umfasst und dass der Befüllstutzen oder Befüllanschluss (5.2) in den kombinierten Gas- und Ölkanal (11) mündet.

6. Modul nach einem der vorhergehenden Ansprüche , **dadurch gekennzeichnet, dass** das Modul (1) ein im Strömungsweg des im Ölabscheider (3) gereinigten Kurbelgehäuseentlüftungsgases liegendes Druckregelventil (30) zur Regelung des im Kurbelgehäuse (71) herrschenden Drucks umfasst.

7. Modul nach Anspruch 6, **dadurch gekennzeichnet, dass** das Druckregelventil (30) auf den Ölabscheider (3) aufgesetzt ist und einen Leitungsanschluss (13.3) für eine zu einem Ansaugtrakt der Brennkraftmaschine (7) führende Gasleitung für das im Ölabscheider (3) entölte Kurbelgehäuseentlüftungsgas aufweist.

8. Modul nach einem der vorhergehenden Ansprüche, **dadurch gekennzeichnet, dass** die die Flanschverbindung (10) durchlaufenden Kanäle (11, 12.1, 12.2, 14.1 - 14.4) gegeneinander und gegen die Umgebung durch axial dichtende Dichtmittel (16) abgedichtet sind.

9. Modul nach Anspruch 8, **dadurch gekennzeichnet, dass** die Dichtmittel (16) der Flanschverbindung (10) an dem modulseitigen Flansch (10.1) angebracht sind.

10. Modul nach Anspruch 9, **dadurch gekennzeichnet, dass** die Dichtmittel (16) durch eine einzige, einstückige Profildichtung gebildet sind.

11. Modul nach einem der Ansprüche 8 bis 10, **dadurch gekennzeichnet, dass** das oder die Dichtmittel (16) in eine oder mehrere Aufnahmennuten (17) im modulseitigen Flansch (10.1) eingesetzt oder eingeklemmt oder eingeklebt oder einvulkanisiert ist/sind.

12. Modul nach Anspruch 8 oder 9, **dadurch gekennzeichnet, dass** die Flanschverbindung (10) beidseltig ebenflächig ausgeführt ist und dass das Dichtmittel (16) eine einstückige Flachdichtung ist.

## Claims

1. A module (1) for an internal combustion engine (7) being designed as a structural unit of at least one oil filter (2) for the lubricating oil of the internal combustion engine (7) and an oil separator (3) for the crankcase ventilation gas of the internal combustion engine (7) and being flanged, as a whole, by means of a flange connection (10) to the internal combustion engine (7) by making flow connections, wherein an oil duct (12.1) for oil to be filtered leads from the internal combustion engine (7) to the oil filter (2) and an oil duct (12.2) for filtered oil leads from the oil filter (2) to the internal combustion engine (7), wherein a ventilation duct (13.1) for crankcase ventilation gas leads from the crankcase (71) of the internal combustion engine (7) to the oil separator (3) and wherein an oil return duct (13.2) for separated oil leads from the oil separator (3) to the crankcase (71) of the internal combustion engine (7),
**characterized in that**
- a drainage duct (21) is provided in the module (1) for drainage of the oil filter (2) upon a filter insert change, said duct being connected by the flange connection (10) with the crankcase (71) of the internal combustion engine (7); and
- the drainage duct (21), the ventilation duct (13.1) and the oil return duct (13.2) are combined in the flange connection (10) and at least over a part of their length in the module (1) to a single, combined gas and oil duct (11).

2. The module according to claim 1, **characterized in that** the module (1) comprises an oil cooler (4) for cooling the lubricating oil of the internal combustion engine (7) by means of its cooling water, that the oil cooler (4) has an oil drain (41) releasable upon an oil and/or filter insert change, and that the oil drain (41) ends in the combined gas and oil duct (11).

3. The module according to claim 2, **characterized in that** the module (1) comprises one cooling water duct (14.1, 14.2) each, extending through the flange connection (10) and leading cooling water from the internal combustion engine (7) to the oil cooler (4) and cooling water from the oil cooler (4) to the internal combustion engine (7).

4. The module according to any one of the preceding claims, **characterized in that** the module (1) comprises a lubricating oil filling nozzle (5.1) for filling lubricating oil into the internal combustion engine (7) after an oil change and for refilling lubricating oil as needed, and that the lubricating oil filling nozzle (5.1) ends in the combined gas and oil duct (11).

5. The module according to any one of the preceding claims, **characterized in that** the module (1) comprises a filling nozzle or filling connection (5.2) for initially filling the internal combustion engine (7) with lubricating oil, and that the filling nozzle or filling connection (5.2) ends in the combined gas and oil duct (11).

6. The module according to any one of the preceding claims, **characterized in that** the module (1) comprises a pressure control valve (30) for regulating the pressure prevailing in the crankcase (71), said valve being located in the flow path of the crankcase ventilation gas purified in the oil separator (3).

7. The module according to claim 6, **characterized in that** the pressure control valve (30) is set onto the oil separator (3) and has a line connection (13.3) for a gas line leading to an intake tract of the internal combustion engine (7) for the crankcase ventilation gas de-oiled in the oil separator (3).

8. The module according to any one of the preceding claims, **characterized in that** the ducts (11, 12.1, 12.2, 14.1 - 14.4) running through the flange connection (10) are sealed against each other and against the environment by means of axially sealing sealants (16).

9. The module according to claim 8, **characterized in that** the sealants (16) of the flange connection (10) are attached to the flange (10.1) on the module side.

10. The module according to claim 9, **characterized in that** the sealants (16) are formed by a single, one-piece profile seal.

11. The module according to any one of the claims 8 to 10, **characterized in that** the sealant or sealants (16) is/are inserted or clamped or glued or vulcanized into one or a plurality of receiving grooves (17) in the flange (10.1) on the module side.

12. The module according to claim 8 or 9, **characterized in that** the flange connection (10) is planar in design on both sides and that the sealant (16) is a one-piece flat seal.

## Revendications

1. Module (1) pour un moteur à combustion interne (7), réalisé en tant qu'unité de construction composée d'au moins un filtre d'huile (2) pour l'huile de graissage du moteur à combustion interne (7) et d'un séparateur d'huile (3) pour le gaz de ventilation du carter de vilebrequin du moteur à combustion interne (7), et flasqué en entier sur le moteur à combustion interne (7) au moyen d'une liaison par flasque (10) avec réalisation de liaisons d'écoulement, un canal d'huile (12.1) pour l'huile à filtrer allant du moteur à combustion interne (7) au filtre d'huile (2) et un canal d'huile (12.2) pour l'huile filtrée allant du filtre d'huile (2) au moteur à combustion interne (7), un canal de ventilation (13.1) pour le gaz de ventilation du carter de vilebrequin allant du carter de vilebrequin (71) du moteur à combustion interne (7) au séparateur d'huile (3) et un canal de retour de l'huile (13.2) pour l'huile séparée allant du séparateur d'huile (3) au carter de vilebrequin (71) du moteur à combustion interne (7),
**caractérisé en ce que**:
- est prévu, dans le module (1), pour vider le filtre d'huile (2) dans le cas d'un remplacement de l'élément filtrant, un canal de vidange (21) qui est relié au carter de vilebrequin (71) du moteur à combustion interne (7) par la liaison par flasque (10); et
- le canal de vidange (21), le canal de ventilation (13.1) et le canal de retour d'huile (13.2) sont regroupés dans la liaison par flasque (10) et au moins sur une partie de leur longueur dans le module (1) pour former un unique canal combiné de gaz et d'huile (11).

2. Module selon la revendication 1, **caractérisé en ce que** le module (1) comprend un refroidisseur d'huile (4) pour refroidir l'huile de graissage du moteur à combustion interne (7) au moyen de l'eau de refroidissement de celui-ci, **en ce que** le refroidisseur d'huile (4) comporte une sortie d'huile (41) pouvant être débloquée en cas de remplacement de l'huile ou de l'élément filtrant et **en ce que** la sortie d'huile (41) débouche dans le canal combiné de gaz et d'huile (11).

3. Module selon la revendication 2, **caractérisé en ce que** le module (1) comprend respectivement un canal d'eau de refroidissement (14.1, 14.2) transportant de l'eau de refroidissement du moteur à combustion interne (7) vers le refroidisseur d'huile (4) et de l'eau de refroidissement du refroidisseur d'huile (4) vers le moteur à combustion interne (7), et traversant la liaison par flasque (10).

4. Module selon l'une des revendications précédentes, **caractérisé en ce que** le module (1) comprend un embout de remplissage d'huile de graissage (5.1) pour introduire de l'huile de graissage après un remplacement de l'huile et pour refaire le niveau d'huile de graissage dans le moteur à combustion interne (7) selon les besoins et **en ce que** l'embout de remplissage d'huile de graissage (5.1) débouche dans le canal combiné de gaz et d'huile (11).

5. Module selon l'une des revendications précédentes, **caractérisé en ce que** le module (1) comprend un embout de remplissage ou un raccordement de remplissage (5.2) pour le premier remplissage du moteur à combustion interne (7) avec de l'huile de graissage et **en ce que** l'embout de remplissage ou le raccordement de remplissage (5.2) débouche dans le canal combiné de gaz et d'huile (11).

6. Module selon l'une des revendications précédentes, **caractérisé en ce que** le module (1) comprend une soupape de régulation de pression (30) située dans la voie d'écoulement du gaz de ventilation du carter de vilebrequin purifié dans le séparateur d'huile (3) pour le réglage de la pression qui règne dans le carter de vilebrequin (71).

7. Module selon la revendication 6, **caractérisé en ce que** la soupape de régulation de pression (30) est posée sur le séparateur d'huile (3) et comporte un raccordement de conduite (13.3) pour une conduite de gaz allant vers une tubulure d'admission du moteur à combustion interne (7) pour le gaz de ventilation du carter de vilebrequin déshuilé dans le séparateur d'huile (3).

8. Module selon l'une des revendications précédentes, **caractérisé en ce que** les canaux (11, 12.1, 12.2, 14.1 - 14.4) qui traversent la liaison par flasque (10) sont étanches entre eux et par rapport à l'environnement grâce à des moyens d'étanchéité (16) qui assurent une étanchéité axiale.

9. Module selon la revendication 8, **caractérisé en ce que** les moyens d'étanchéité (16) de la liaison par flasque (10) sont montés sur le flasque (10.1) du côté du module.

10. Module selon la revendication 9, **caractérisé en ce que** les moyens d'étanchéité (16) sont constitués par un unique joint profilé monopièce.

11. Module selon l'une des revendications 8 à 10, **caractérisé en ce que** le ou les moyens d'étanchéité (16) sont insérés ou serrés ou collés ou vulcanisés dans une ou plusieurs rainures de logement (17) dans le flasque (10.1) du côté du module.

12. Module selon la revendication 8 ou 9, **caractérisé en ce que** la liaison par flasque (10) est de réalisation plane des deux côtés et **en ce que** le moyen d'étanchéité (16) est un joint monopièce plat.
